# EUROPEAN PATENT SPECIFICATION

(11) **EP 1 777 054 B1**
(45) Date of publication and mention of the grant of the patent: **06.01.2010**
(21) Application number: 06021985.4
(22) Date of filing: 19.10.2006
(51) Int. Cl.: B29C 45/26, G02F 1/13, H04N 5/64

(54) **Mold for injection moulding, injection molding method for flat display panel cabinet, and plasma display television**
Spritzgussform, Spritzgiessverfahren für Flachbildschirmgehäuse und Plasmafernseher
Moule de moulage par injection,procédé de moulage par injection pour armoire de panneau d'affichage plat, et télévision à affichage à plasma

(30) Priority: 24.10.2005 JP 2005308479
(43) Date of publication of application: 25.04.2007
(73) Proprietor: Funai Electric Co., Ltd., Daito-shi, Osaka (JP)
(72) Inventor: Maruta, Naoto c/o Funai Electric Co., Ltd., Osaka (JP)
(74) Representative: Grünecker, Kinkeldey, Stockmair & Schwanhäusser Anwaltssozietät

(56) References cited:
- WO-A-03/066308
- DE-A1- 19 544 736
- JP-A- 6 015 685
- JP-A- 2001 145 046
- JP-A- 2001 353 756
- JP-A- 2004 075 756
- US-A1- 2002 080 297
- US-A1- 2005 024 552

## Description

The present invention relates to a resin molding method for molding a cabinet to be mounted at the view area of a flat display panel.

US 2005/024552 A, which is regarded as closest prior art, discloses resin molding metal molds suitable for molding a cabinet mounted to the view area of a flat panel display. The metal molds comprise a core metal mold and a cavity mold. The core metal mold is a common metal mold having a cavity portion suitable for forming a resin molding cavity corresponding to all sizes of the cabinet for flat display panels. The cavity metal mold is a metal mold that has a portion forming a resin molding cavity corresponding to each size of the cabinet for a flat panel display.

WO 03/066308 A discloses a resin molding metal molds suitable for molding a cabinet mounted to the view area of a CRT display, wherein the metal molds comprise a core metal mold and a cavity metal mold.

JP 06015685 A discloses the general idea of molding different products in a two-part mold having a common metal mold having a concave portion that forms a resin molding cavity corresponding to all different products, and an exchangeable cavity metal mold.

US 2002/080297 A1 describes a LCD television whose cabinet molded by resin molding metal molds is mounted to the view area of a LCD display panel.

Televisions that display broadcast pictures to be watched by audiences have been widely used at home for a long time as major media for watching entertainment programs, movies, news, etc. However, Cathode Ray Tune (CRT)-based televisions which have been the mainstream for a long time have problems with depth, weight, and/or power consumption, and therefore increasing their screen sizes was about to reach a limit.

Meanwhile, with the improvement in semiconductor technologies, new display devices such as plasma displays and Liquid Crystal Displays (LCDs) have been developed in recent years that are different from CRTs. Since these display devices are thinner as compared with conventional CRTs, they are often generically called flat display panels.

The flat display panels for televisions have achieved reduced cost and increased size due to technological improvements and volume efficiency, and, coupled with replacement demand associated with the digitalization of television broadcast as well as housing conditions in Japan with restricted spaces, the market for flat display panels is rapidly expanding, taking over the conventional CRTs.

When manufacturing televisions using these flat display panels, some manufacturers fabricate such televisions by using panel assemblies acquired from a panel manufacturer and adding their own control processing technology and the like to the panel assemblies. These general-purpose panel assemblies have various-sized view areas, and TV manufactures typically fabricate televisions by using different components according to different-sized panel assemblies.

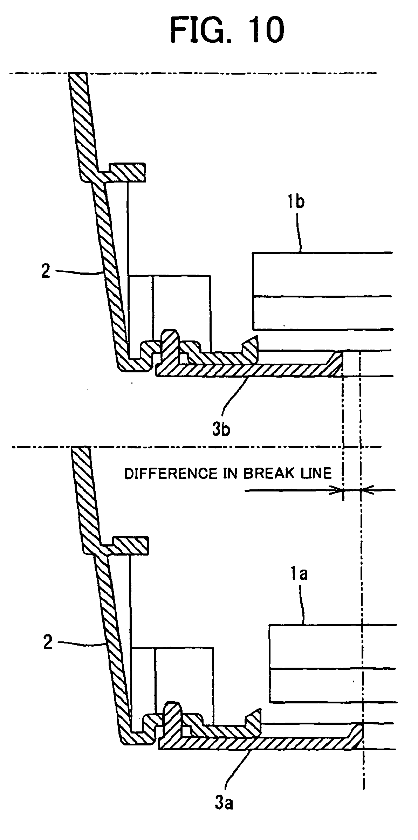

However, for different panel assemblies with approximate view areas sizes, for example, the same cabinets are often used as common cabinets to which these panel assemblies are mounted, for cost reduction. Fig. 10 shows a partial cross-sectional views of 26-inch and27-inch plasma display panel assemblies 1a and 1b which are mounted to a common cabinet 2 as flat display panels.

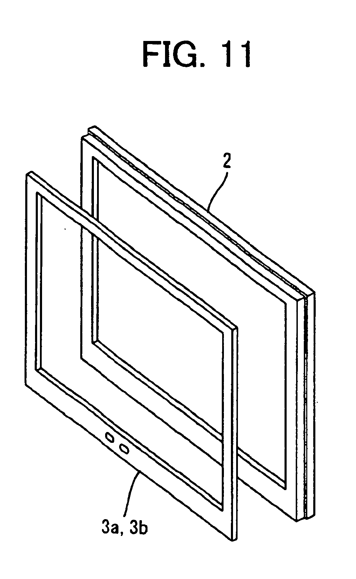

In Fig. 10, the cabinets 2 to which the 26-inch and 27-inch plasma display panel assemblies 1a and 1b are mounted are the same. However, since view area sizes of the panel assemblies 1a and 1b are different, the distance between the panel-side peripheral edges of the cabinet and the circumference of the view area of the panel assembly 1a is naturally different from that of 1b. Therefore, it is impossible to directly cover up to the circumference of the view area of each of the panel assemblies 1a and 1b with the panel-side peripheral edge of the common cabinet 2. Accordingly, a double structure configuration is employed wherein the panel-side peripheral edge of the common cabinet 2 is held in front of the circumference of the view area of the panel assemble 1a, 1b to provide a gap, and thereby accommodate the difference in gaps formed by different panel sizes, and then the gap is covered with a decorative laminate 3a, 3b called a bezel as shown in Fig. 11 that fits the size of each panel assembly.

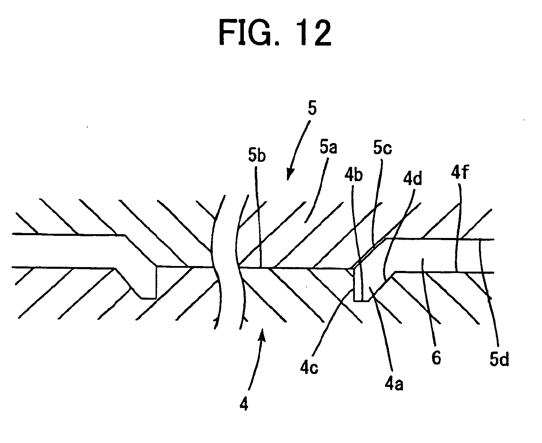

To mold the bezels 3a, 3b with resin, a pair of metal molds comprising a core metal mold and a cavity metal mold are needed. That is, as shown in a partial cross-sectional view of Fig. 12, an approximately rectangular molding groove 4a is formed on the core metal mold 4 at a position corresponding to the circumference of the view area of the plasma display panel 1a, 1b. The molding groove 4a is formed on an area with approximately trapezoidal cross-section composed of: a bottom 4b corresponding to an area opposite to the screen of the plasma display panels 1a, 1b; an approximately vertical surface 4c corresponding to the inwardof the view area; and a tapered surface 4d corresponding to the outward of the view area. On the other hand, the cavity metal mold 5 has a convex portion 5a with approximately trapezoidal cross-section that is composed of: a bottom 5b of having the same shape as an approximately rectangular area surrounded by the molding groove 4a of the core metal mold; and an upwardly expanding tapered surface 5c formed around the bottom 5b.

To form the bezel 3a, 3b, the approximately rectangular area surrounded by the molding groove 4a on the core metal mold 4 and the bottom 5b of the convex portion 5a of the cavity metal mold 5 are brought into contact with each other, and resin is injected into a cavity 6 formed by the molding groove 4a on the core metal mold 4, the outward surface 4f of the molding groove 4a, and the convex portion 5a, tapered surface 5c, and outward surface 5d of the cavity metal mold 5.

As described above, since the distance to the gap to be covered by the bezel is different between the 26-inch and 27-inch plasma display panel assemblies 1a, 1b, bezels of different length must to molded according the difference in the distance. This necessitates changing the position of the molding groove on the core metal mold 4, and the position of the convex portion 5a of the cavity metal mold 5. As a result it is necessary to prepare four types of metal molds 4 and 5, two types for each of the 26-inch and 27-inch plasma display panel assemblies. This results in the following problems:

That is, many types of metal mold are required and the cost increases substantially.

Also, since metal molds for molding the bezels are used for large-sized plasma display panels such as 26-inch and 27-inch panels, and sizes of those metal molds are very large, a very large storage space is necessary to prepare metal molds for different-sized plasma display panel assemblies.

Furthermore, it is also necessary to replace metal molds according to panel assembly sizes, and this mold change work consumes a great deal of time.

On the other hand, for reducing the number or cost of metal molds used for resin molding, the following technology is disclosed.

That is, according to Japanese Patent Laid-Open No. 2001-298831 (Patent Document 1), in molding an electrical junction box, the junction box is divided into a cavity portion and a box body, and the cavity portion is first molded and then the molded cavity portion is inserted into the box body. By doing this, when the cavity portion alone or the box body alone is different, the other metal mold can be used in common, and therefore it is possible to reduce the cost and number of metal molds as compared with a case where the cavity portion and box body are integrally molded.

According to Japanese Utility Patent Laid-Open No. 1993-16256 (Patent Document 2), in a cavity metal mold and a core metal mold each having a fitting nest, a blocking lever is attached to the nest of the core metal mold that can be moved in and out of a molding concave portion. The blocking lever is moved in to block the inj ection of resin according to the molding shape. This eliminates the need for replacing the nest for molding and as a result the cost and number of metal molds can be reduced.

According to Japanese PatentLaid-Open No.1993-278081 (Patent Document 3), different shape molding is enabled by providing a removable nest portion in some part of a metal mold and replacing only the next portion. This allows only a nest portion to be replaced without having to prepare a whole metal mold, and consequently the cost and number of metal molds can be reduced.

Also, the followingprior art is disclosed that enables a plastic television cabinet to be molded without a weld line or gate trace.

That is, according to Japanese Patent Laid-Open No. 1996-132481 (Patent Document 4), resin is injected before finishing the clamping, and the gap between cavity and core molds is filled with the resin injected through a film-like gate without providing a runner. The gate is cut by the clamping before the resin is hardened at a convex portion provided on the border between product and gate. By doing the above, a runner becomes unnecessary and no weld line or gate trace is left, thus improving the appearance quality.

However, in the configuration of the abovementioned Japanese Patent Laid-Open No. 2001-298831 described above, although the cost and number of metal molds can certainly reduced as compared with a case where the cavity portion and box body are integrally molded, it is still necessary to prepare different metal molds for portions requiring different molding in separately molded cavity portion and box body.

When mounting different-sized plasma display panels to the cabinet as described above, the double structure composed of a cabinet and a bezel and the common use of a cabinet are already proposed. The problem is that many different metal molds are required in order to mold different-sized bezels. Therefore, this problem cannot be solved by the technology disclosed in the abovementioned Patent Document 1.

In the configuration of Patent Document 2, it is certainly possible to reduce the number of metal molds by providing a shielding lever and moving the same in and out of the molding concave portion. However, if this configuration is applied to the molding of the cabinet or bezel, a parting line corresponding to a mounting seam of the nest is inevitably formed. Since the cabinet and bezel is positioned at the outside of a product and meets the eyes of consumers, this parting line damages the appearance quality and therefore it is difficult to apply this configuration.

When applying the configuration in the abovementioned Japanese Patent Laid-Open No. 1993-278081, if the portion molded by a replaceable nest is limited to part of the cabinet or bezel, a parting line corresponding to the mounting seam of the nest is inevitably formed just like the above configuration, thus damaging the appearance and making it difficult to apply. In contrast, if the portion molded by the replaceable nest is expanded to the entire cabinet or bezel, the parting line problem is eliminated, but this is not much different from replacing a metal mold entirely and the problem still cannot be solved.

The configuration of the abovementioned Japanese Patent 1996-132481 is a technology to prevent a weld line and a gate trace from being formed, and therefore is unable to solve the problem of increased number of metal molds described above.

The present invention discloses a resin molding method for flat display panel cabinets that resolves the problems with resin molding metal molds used for molding a cabinet to be mounted to the view area of different sized flat display panels, specifically the problem of double structure formed by a cabinet and a bezel and the problem of requiring various types of metal mold to mold different-sized bezels. Further, the present invention uses a common core metal mold for different sized cabinets and thereby reduce the number of metal molds. In addition, the present invention eliminates the need for the double structure wherein a cabinet and a bezel are mounted.

According to one embodiment of the present invention, there is provided a resin molding method for a cabinet to be mounted to the view area of a flat display panel, wherein:
the flat display panel has at least two different sizes;
a core metal mold out of a pair of mating metal molds is a common metal mold that has surfaces of a concave portion forming a cavity for resin molding accommodating all the sizes of the cabinet for a flat display panel;
the other cavity metal mold out of the pair of mating metal molds is a metal mold that has surfaces of a convex portion forming a cavity for resin molding for each size of the cabinet for the flat display panel, and the same number of the cavity metal molds as the number of sizes of a flat display panel are prepared; and
the single common core metal mold and one of the cavity metal molds combined according to the size of the flat display panel are used as appropriate, and when the both metal molds are contacted with each other, part of the concave portion is covered by the convex portion according to the size of the flat display panel, and resin is injected into a cavity formed by the concave portion and convex portion to mold the cabinet fit for the flat display panel.

According to the inventive resin molding method, the number of metal molds can be reduced by using a common core metal mold for different sized cabinet, and also the double structure becomes unnecessary that is required when mounting the common cabinet to different-sized flat panel displays and includes a bezel to cover the gap between the view area of the flat panel display and the cabinet, and thus it is possible to provide a resin molding method that enables cost reduction, space saving, and high productivity.

Embodiments of the present invention will be described in detail based on the following figures, wherein:
Fig. 1 is a bloc diagram to explain embodiment 1 of the present invention;
Fig. 2 is a partial cross-section view to explain embodiment 1 of the present invention;
Fig. 3 is a partial cross-section view to explain embodiment 1 of the present invention;
Fig. 4 is a partial cross-section view to explain embodiment 1 of the present invention;
Fig. 5 is a partial cross-section view to explain embodiment 1 of the present invention;
Fig. 6 is a partial cross-section view to explain embodiment 2 of the present invention;
Fig. 7 is a partial cross-section view to explain embodiment 2 of the present invention;
Fig. 8 is a partial cross-section view to explain embodiment 2 of the present invention;
Fig. 9 is a partial cross-section view to explain embodiment 2 of the present invention;
Fig. 10 is a partial cross-section view to explain a prior art;
Fig. 11 is perspective view to explain the prior art; and
Fig. 12 is a partial cross-section view to explain the prior art.

While the invention has been particularly shown and described with respect to preferred embodiments thereof, it should be understood by those skilled in the art that the foregoing and other changes in form and detail may be made therein without departing from the spirit and scope of the invention as defined in the appended claims.

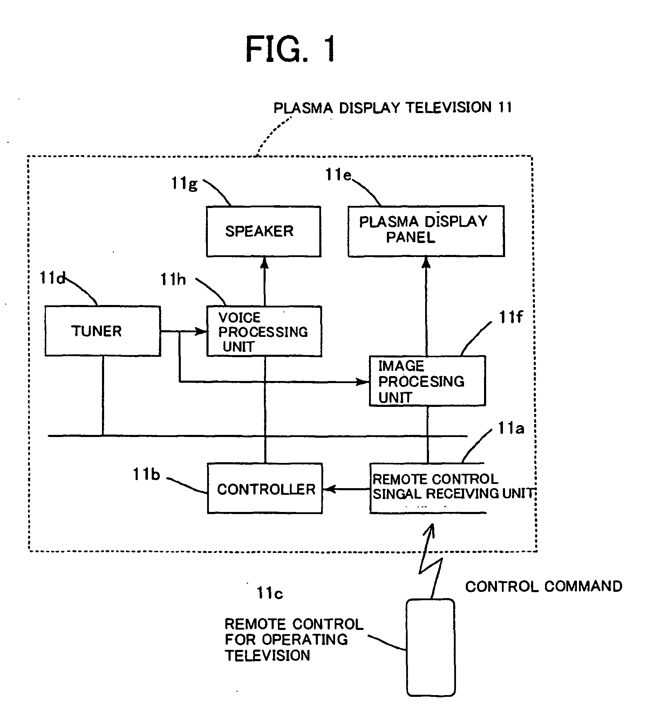

Fig. 1 shows a bloc diagram to explain a basic configuration of a plasma display television which is not part of the invention but is helpful for the understanding of the invention, using a plasma display panel as a flat display panel.

As illustrated in Fig. 1, a plasma display television 11 includes a controller 11b to control the operation of the plasma display television. Further included with the plasma display television 11 is a tuner 11d that extracts a television broadcast signal for a selectedchannel from television broadcast signals received by an antenna (not shown), and outputs the extracted signal. An image processing unit 11f displays on a plasma display panel 11e, images based on the television broadcast signal outputted from the tuner 11d. An audio processing unit 11h outputs from a speaker 11g audio based on the television broadcast signals outputted from the tuner 11d. A remote control signal receiving unit 11a receives a control command transmitted from a remote control 11c.

The controller 11b controls the ON/OFF power of the system, changing of channels, audio control for volume, and similar controls according to a control command received by the remote control signal receiving unit 11a. To each unit, such as the remote control signal receiving unit 11a, the controller 11b, the tuner 11d, the plasma display panel 11e, the image processing unit 11f, and the voice processing unit 11h, in the plasma display television 11, an operating current is supplied from a power supply circuit (not shown). The input to this power supply circuit is a commercial power source (for example, 100V AC).

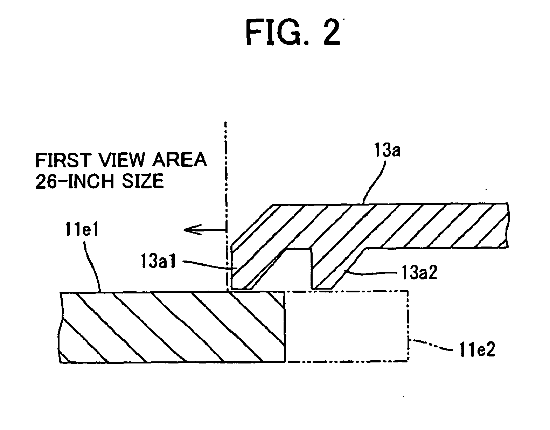

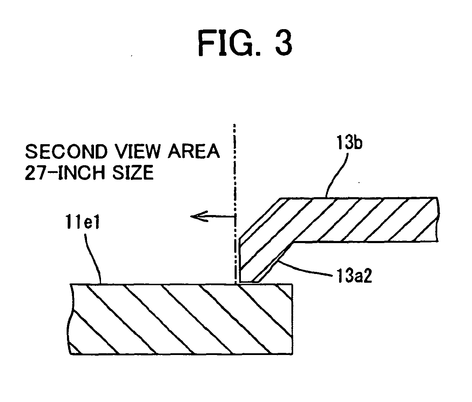

The plasma displaypanels 11e are supplied from a panel manufacturer as a 26-inch or 27-inch general-purpose plasma display panel assemblies 11e1, 11e2. These 26-inch and 27-inch general purpose plasma panel assemblies 11e1 and 11e2 are mounted to cabinet 13a and 13b respectively. These cabinets 13a and 13b have claw portions 13a1 and 13b1 respectively. Each claws has different shapes from each other so as to fit the different-sizedviewarea, as shown in Figs.2 and 3. Accordingly no gap is formed between plasma display panel and cabinet, so there is no need of adoption the conventional double structure including a bazel.
A method of molding the cabinets 13a and 13b according to the present invention is described below.

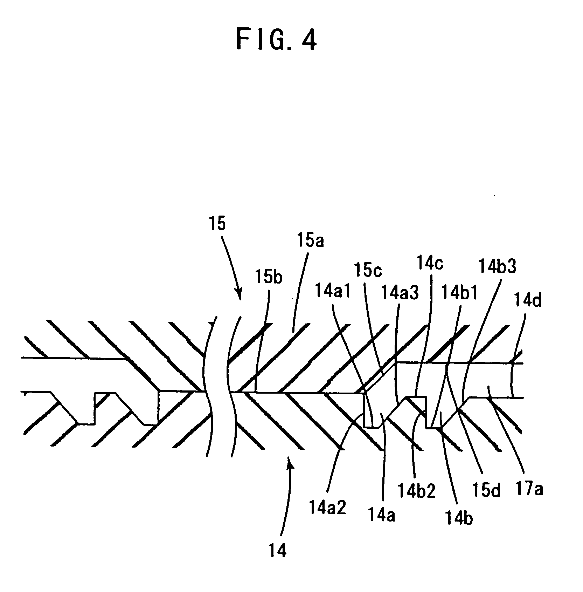

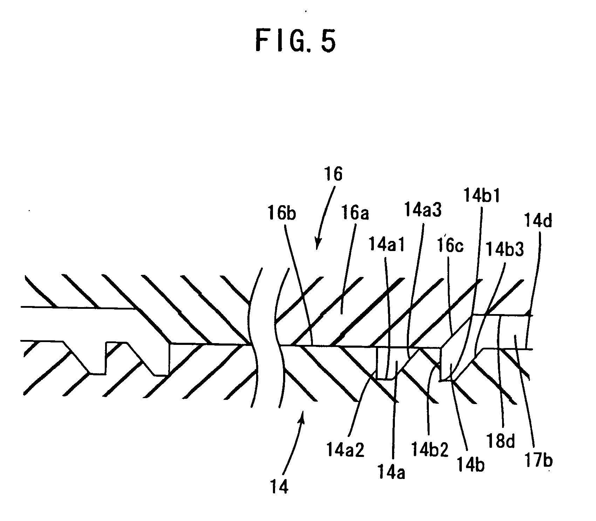

The cabinet 13a and 13b are molded with metal molds configured as shown in Fig. 4 and 5, respectively. That is, a metal mold for molding the cabinet 13a for the 26-inch plasma display panel 11e1 is composed of a core metal mold 14 and a cavity metal mold 15. The core metal mold 14 has two different molding grooves, with a first approximately rectangular molding groove 14a formed at a position corresponding to first view area circumference of the 26-inch sized (first size) plasma display panel 11e1. A second approximately rectangular molding groove 14b is formed at a position corresponding to a second view area circumference, which is one size larger than the first view area circumference, of the 27-inch sized plasma display panel 11e2.

The first molding groove 14a and the secondmolding groove 14b are formed on an area with approximately trapezoidal cross-section that is formed by the bottom surfaces 14a1, 14b1 corresponding to the areas opposite to the screen of a plasma display panel, and approximately vertical surfaces 14a2, 14b2 corresponding to the inward of the view area; and expanding tapered surfaces 14a3, 14b3 corresponding to the outward of the view area.

The first cavity metal mold 15 has a convex portion 15a with approximately trapezoidal cross-section that is composedof an undersurface 15b of the same shape as an approximate rectangle surrounded by the first molding groove 14a on the core metal mold 14 and an upward expanding tapered surface 15c formed around the undersurface 15b.

On the other hand, the metal mold for molding the cabinet 13b for the 27-inch plasma display panel 11e2 is composed of a core metal mold 14 and second cavity metal mold 16. That is, the core metal mold 14 is shared between the 26-inch and 27-inch plasma display panels. The second cavity metal mold 16 has a convex portion 16a with approximately trapezoidal cross-section that is composed of an undersurface 16b of the same shape as an approximate rectangle surrounded by the second molding groove 14b on the core metal mold 14 and an upward expanding tapered surface 16c formed around the undersurface 16b.

To mold the cabinet 13a for the 26-inch plasma display panel 11e1, the approximately rectangular surface surrounded by the first molding groove 14a on the core metal mold 14 and the undersurface 15b of the convex portion 15a on the first cavity metal mold 15 are contacted with each other. As a result, a cavity is formed by the first molding groove 14a on the core metal mold, the second molding groove 14b, the surface 14c between these two grooves, the outward surface 14d of the second molding groove 14b, and the tapered surface 15c of the convex portion 15a on the first cavity metal mold and outward upper surface 15d thereof. By injecting resin into this cavity 17a, the cabinet 13a for the 26-inch plasma display panel 11e1 is molded.

The cabinet 13a molded as described above has the two claw portions 13a1 and 13a2 corresponding to the first molding groove 14a and second molding groove 14b respectively, as shown in Fig. 2. The claw portion 13a1 located on the edge faces the view area circumference of the 26-inch plasma display panel 11e1 when mounted. The conventional double structure, including a bezel is not necessary and the required peripheral positions on the plasma display panel 11e1 are completely covered with only the cabinet 13a. The other claw portion 13a2 is located opposite to the view area circumference of the 27-inch plasma display panel described later, and is not necessary for mounting the 26-inch plasma display panel 11e1, but has no problem since this claw portion 13a2 is located within the cabinet 13a hidden from the view.

To mold the cabinet 13b for the 27-inch plasma display panel, the approximately rectangular surface surrounded by the second molding groove 14b on the core metal mold 14 and the undersurface 16b of the convex portion 16a on the second cavity metal mold 16 are contacted with each other. As a result, the first molding groove 14a is covered at the underside of the convex portion 16a, and a cavity 17b is formed by the second molding 14b and the outward surface 14d thereof, and the tapered surface 16c of the convex portion on the second cavity metal mold 16 and the outward surface 16d thereof. By injecting resin into this cavity 17b, the cabinet 13b for the 27-inch plasma display panel 11e2 is molded.

The cabinet 13b molded as described above has no claw portion 13a1 for the 26-inch plasma display panel as shown in Fig. 3, since the first molding groove 14a on the core metal mold 14 is covered at the undersurface of the convex portion on the second cavity metal mold 16 and resin will not flow therein, resulting in only the claw portion 13a2 corresponding to the second molding groove 14b being formed. The claw portion 13a2 located on the edge faces the view area circumference of the 27-inch plasma display panel 11e2 when mounted. The conventional double structure including a bezel is not necessary and the required peripheral positions of the plasma display panel 11e2 are completely covered with only the cabinet 13b.

As described above, in this embodiment, the cabinets 13a and 13b to be mounted on the view area of the 26-inch and 27-inch general-purpose plasma display panels can be molded individually. This can be achieved by combining, as appropriate, the core metal mold 14 and one of the two different cavity metal molds 15 and 16, which correspond to the 26-inch and 27-inch plasmadisplaypanels, and covering the unnecessary first molding groove on the core metal mold 14 by the cavity metal mold 14 when molding the 27-inch cabinet 13b.

Accordingly, by sharing one core metal mold 14 in molding the different sized (26-inch and 27-inch) cabinets, the number of metal molds is reduced as compared with the prior art, and also the conventional double structure becomes unnecessary that includes a bezel to cover the gap between the view area of a plasma display panel and the cabinet, which is required to mount the common cabinet for 26-inch and 27-inch general-purpose plasma display panels. As a result, it is possible to provide metal molds for resin molding that achieves cost saving, space saving, and improved productivity.

Next, another embodiment is described that is substantially similar as the above-mentioned embodiment in that one core metal mold and one of two different cavity metal molds corresponding to 26-inch and 27-inch plasma display panels are combined as appropriate, and cabinets to be mounted to the view area sides of the two different-sized general-purpose plasma displays are individually molded, but the shapes of the core metal mold and cavity metal mold are different.

Only the different configuration from the previous embodiment is described, the description of the common configuration being omitted.

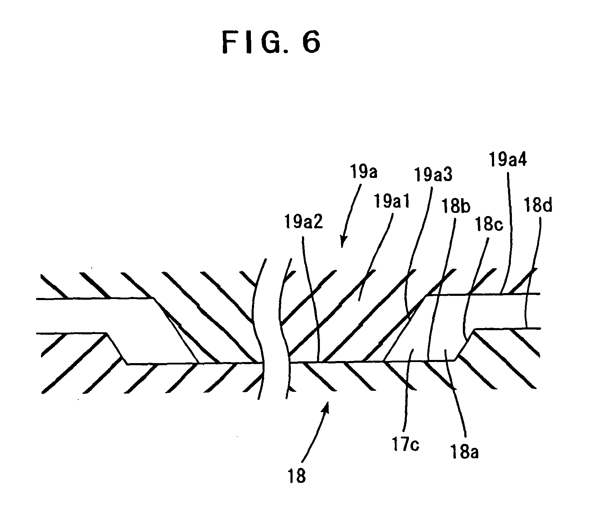

As shown in Fig. 6, a concave portion 18a on a core metal mold 18 is composed of an approximately rectangular bottom surface 18b surrounding an area corresponding to the view area circumference of the 27-inch plasma display panel 11e2 and the outward thick portion of the cabinet, and a upward tapered surface 18c formed around the bottom surface 18b.

On the other hand, the cavity metal mold includes a third cavity metal mold 19a corresponding to the 26-inch plasma display panel 11e1,and a fourth cavity metal mold 19b corresponding to the 27-inch plasma display panel 11e2.

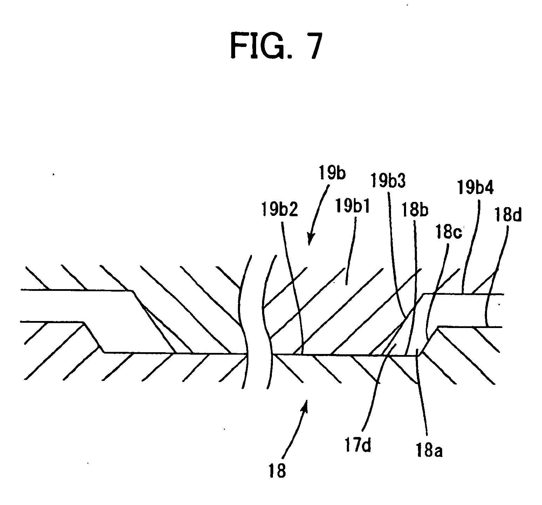

The third cavity metal mold 19a has a convex portion 19a1 with approximately trapezoidal cross-section that is composed of an approximately rectangular undersurface 19a2 surrounding an area corresponding to the view area of the 26-inch plasma display panel 11e1 and an upward tapered surface 19a3 formed around the undersurface 19a2, while, in Fig. 7, the fourth cavity metal mold 19b has a convex portion 19b1 that is one size larger with approximately trapezoidal cross-section that is composed of an approximately rectangular undersurface 19b2 surrounding an area corresponding to the view area of the 27-inch plasma display panel 11e2 and a upward expanding tapered surface 19b3 formed around the undersurface 19b2.

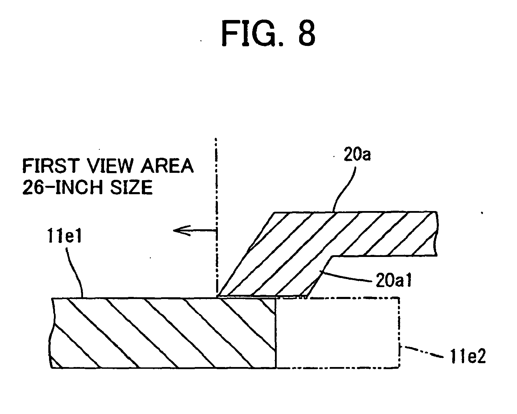

As shown in Fig. 6, to mold the cabinet for a 26-inch plasma display panel, the approximately rectangular bottom surface 18b on the core metal mold 18 and the undersurface 19a2 of the convex portion 19a1 on the third cavity metal mold 19a are contacted with each other. As a result, a part of the concave portion 18a is covered by the convex portion 19b, and a cavity 17c is formed by; a peripheral area of the bottom surface 18b, which does not contact the undersurface 19a2; the tapered surface 18c; an outward upper surface 18d; the tapered surface 19a3; and an outward upper surface 19a4. By injecting resin into this cavity 17c, the cabinet for a 26-inch plasma display panel as shown in Fig. 8 is molded.

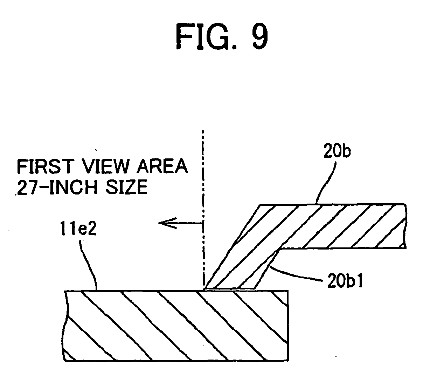

The cabinet 20a molded as described above has a claw portion 20a1. When the cabinet 20a is mounted the claw portion 20a1 is located at a position opposite to the view area circumference of the 26-inch plasma display panel 11e1, and the required peripheral positions of the plasma display panel 11e1 are completely covered by only the cabinet 20a, without the need of adopting the conventional double structure with a bezel. Since the peripheral side tapered surface of the claw portion 20a1 is located at the same position of the claw portion 20b1 (illustrated in Fig. 9) corresponding to the view area circumference of the 27-inch plasma display panel, the claw portion 20a1 is thicker than the claw portion 20b1, but it has no problem since it is located within the cabinet 20a and hidden from the eye.

On the other hand, to mold the cabinet 20b (illustrated in Fig. 9) for a 27-inch plasma display panel, as shown in Fig. 7, the approximately rectangular bottom surface 18b on the core metal mold and the undersurface 19bs of the convex portion 19ba on the fourth cavity metal mold 19b are contacted with each other. As a result, part of an area of the concave portion 18a is covered by the convex portion 19b1, and the covered area of the concave portion 18a is one size larger of the concave portion than in the case of the 26-inch plasma display panel is covered by the convex portion. A cavity 27d is formed by: a peripheral area of bottom surface 18b, which does not contact the undersurface 19b2; the tapered surface 18c; the outward upper surface 18d; the tapered surface 19b3; and the outward upper surface 19b4. By injecting resin into this cavity, the cabinet 20b for a 27-inch plasma display panel as shown in Fig. 9 is formed.

The cabinet 20b molded as described above has a claw portion 20b1, as illustrated in Fig. 9. When the cabinet 20b is mounted the claw portion 20b1 is located at an area opposite to the view area circumference of the plasma display panel 11e2, and the requiredperipheral positions of the plasma display panel 11e2 is completely covered by only the cabinet 20b, without the need of adopting the conventional double structure with a bezel.

As described above, this embodiment is different from the first embodiment in that the size difference between 26-inch and 27-inch plasma display panels is accommodated by changing the size of an area where part of the concave portion is covered by the convex portion and thereby changing the thickness of the claw portion of the cabinet, thereby changing the thickness of the claw portion of the cabinet. However, both embodiment are substantially similar in that two different cavity metal molds corresponding to the sizes of 26-inch and 27-inch plasma display panels are prepared. That two different cavity metal mold are used by combining one of these metal molds with one core metal mold as appropriate. When the core and cavity metal molds are contacted with each other, part of the concave portion is covered by the convex portion according to the size of a plasma display panel. Resin is injected into a cavity formed by the concave portion and the convex portion to mold the cabinet to be mounted to the view area of a 26-inch or 27-inch general-purpose plasma display.

Accordingly, this embodiment uses the same core metal mold for two different-sized (26-inchand27-inch) plasma display panels. This reduces the number of metal mold as compared with the prior art, and eliminates the need for the conventional double structure wherein a bezel is mounted to cover the gap between view area of the plasma display panel and the cabinet, which is required for a common cabinet to different-sized (26-inch and 27-inch) general-purpose plasma display panels. Consequently, it is possible to provide metal molds for resin molding whereby cost reduction, space saving, and productivity improvement can be achieved.

The present invention is not limited to the configuration of each embodiment, and can be modified to apply to the following non-limiting exemplary configurations listed below within the scope of the claim:

1. In each embodiment, a plasma display panel is described as an example of the flat display panel, but the present invention is not limited thereto and applicable to other flat display panels including an LCD and an organic EL.

2. In each embodiment, the vertical cross-section or horizontal cross-section of the concave portion and the convex portion (i.e., the cabinet to be molded) on the core metal mold and the cavity metal mold is only an example and can be changed as appropriate. The point is that it is sufficient to be able to form a cavity whereby a cabinet can be molded that fits the size of a flat display panel to which the cabinet is mounted.

3. Although the panel sizes used in the embodiments are 26-inch and 27-inch, these sizes are only examples and other sizes are possible. However, sizes must be adjacent to each other, such as a case that sizes are consecutive in a sequence, so that a common cabinet can be used.

4. Panel sizes that allow molding with a common core metal mold are not limited to two sizes, and three or more sizes are possible. In such a case, a concave portion must be formed according to each additional size.

5. Although each embodiment is configured to eliminate the double structure with a bezel, it is possible to leave this double structure with a bezel and use a common cabinet to apply the molding with each metal mold to a different bezel according to the size of a display panel. This eliminates the advantage of making the double structure with a bezel unnecessary, but at least the conventional advantage of reducing the number of metal molds in bezel molding can be obtained.

It should be understood by those skilled in the art that various modifications, combinations, sub-combinations and alterations may occur depending on design requirements and other factors insofar as they are within the scope of the appended claim thereof.

## Claims

1. A resin molding method for a cabinet (13a,13b) to be mounted to the view area of a flat display panel (11e1,11e2),
wherein:
the flat display panel (11e1,11e2) has at least two different sizes;
a core metal mold (14) out of a pair of mating metal molds is a common metal mold that has surfaces of a concave portion (14a,14b) forming a cavity (17a,17b) for resin molding accommodating all the sizes of the cabinet (13a,13b) for a flat display panel (11e1,11 e2);
the other cavity metal mold (15,16) out of the pair of mating metal molds is a metal mold that has surfaces of a convex portion (15a,16a) forming a cavity (17a,17b) for resin molding for each size of the cabinet (13a,13b) for the flat display panel (11e1,11e2), and the same number of the cavity metal molds (15,16) as the number of sizes of the flat display panel (11e1,11e2) are prepared; and
the single common core metal mold (14) and one of the cavity metal molds (15,16) combined according to the size of the flat display panel (11e1,11e2) are used as appropriate, and when the both metal molds are contacted with each other, part of the surfaces of a concave portion (14a,14b) is covered by the convex portion (15a,16a) according to the size of the flat display panel (11e1,11e2), and resin is injected into a cavity (17a,17b) formed by the concave portion (14a,14b) and convex portion (15a,16a) to mold the cabinet (13a,13b) fit for the flat display panel (11e1,11e2).

## Patentansprüche

1. Harzformverfahren für ein Gehäuse (13a, 13b), das an der Sichtfläche eines Flachbildschirms (11e1,11 e2) angebracht werden soll,
wobei:
der Flachbildschirm (11e1,11e2) wenigstens zwei verschiedene Größen hat;
eine Kern-Metallform (14) eines Paars aneinander passender Metallformen eine gemeinsame Metallform ist, die Flächen eines konkaven Abschnitts (14a, 14b) hat, die einen Hohlraum (17a, 17b) zum Harzformen bilden, mit dem alle Größen des Gehäuses (13a, 13b) für einen Flachbildschirm (11e1,11e2) abgedeckt werden;
die andere Hohlraum-Metallform (15,16) des Paars aneinander passender Metallformen eine Metallform ist, die Flächen eines konvexen Abschnitts (15a, 16a) hat, die einen Hohlraum (17a, 17b) zum Harzformen für jede Größe des Gehäuses (13a, 13b) für den Flachbildschirm (11e1,11e2) bilden, und die gleiche Anzahl der Hohlraum-Metallformen (15,16) wie die Anzahl von Größen des Flachbildschirms (11e1,11e2) gefertigt werden; und
die einzelne gemeinsame Kern-Metallform (14) und eine der Hohlraum-Metallformen (15, 16), die entsprechend der Größe des Flachbildschirms (11e1,11e2) kombiniert werden, nach Bedarf eingesetzt werden, und, wenn die beiden Metallformen miteinander in Kontakt gebracht werden, ein Teil der Flächen eines konkaven Abschnitts (14a, 14b) entsprechend der Größe des Flachbildschirms (11e1, 11e2) durch den konvexen Abschnitt (15a, 16a) abgedeckt wird und Harz in einen Hohlraum (17a, 17b) eingespritzt wird, der durch den konkaven Abschnitt (14a, 14b) und den konvexen Abschnitt (15a, 16a) gebildet wird, um das Gehäuse (13a, 13b) zu formen, das zu dem Flachbildschirm (11e1, 11e2) passt.

## Revendications

1. Procédé de moulage de résine pour une armoire (13a, 13b) à monter dans la zone de visualisation d'un panneau d'affichage plat (11e1, 11e2),
dans lequel :
le panneau d'affichage plat (11el, 11e2) a au moins deux tailles différentes ;
un moule métallique de coeur (14) parmi une paire de moules métalliques d'accouplement est un moule métallique commun qui a des surfaces d'une partie concave (14a, 14b) formant une cavité (17a, 17b) pour le moulage de résine acceptant toutes les tailles de l'armoire (13a, 13b) pour un panneau d'affichage plat (11e1,11e2) ;
l'autre moule métallique de cavité (15, 16) parmi la paire de moules métalliques d'accouplement est un moule métallique qui a des surfaces d'une partie convexe (15a, 16a) formant une cavité (17a, 17b) pour le moulage de résine pour chaque taille de l'armoire (13a, 13b) pour le panneau d'affichage plat (11e1, 11e2), et le même nombre de moules métalliques de cavité (15, 16) que le nombre de tailles du panneau d'affichage plat (11e1, 11e2) sont préparés ; et
le moule métallique de coeur commun unique (14) et l'un des moules métalliques de cavité (15, 16) combinés en fonction de la taille du panneau d'affichage plat (11e1, 11e2) sont utilisés comme cela est approprié, et lorsque les deux moules métalliques sont en contact l'un avec l'autre, une partie des surfaces d'une partie concave (14a, 14b) est recouverte par la partie convexe (15a, 16a) en fonction de la taille du panneau d'affichage plat (11e1, 11e2), et de la résine est injectée dans une cavité (17a, 17b) formée par la partie concave (14a, 14b) et la partie convexe (15a, 16a) pour mouler l'armoire (13a, 13b) adaptée pour le panneau d'affichage plat (11e1, 11e2).
